Europäisches Patentamt

European Patent Office

Office européen des brevets

(19)

(11) Veröffentlichungsnummer: **0 197 585**
**B1**

## (12) EUROPÄISCHE PATENTSCHRIFT

(45) Veröffentlichungstag der Patentschrift:
22.02.89

(21) Anmeldenummer: 86200486.8

(22) Anmeldetag: 21.03.86

(51) Int. Cl.⁴: **C03B 37/012, C03B 32/00**

(54) Verfahren zur Herstellung von Glaskörpern.

(30) Priorität: 29.03.85 DE 3511439

(43) Veröffentlichungstag der Anmeldung:
15.10.86 Patentblatt 86/42

(45) Bekanntmachung des Hinweises auf die Patenterteilung:
22.02.89 Patentblatt 89/8

(84) Benannte Vertragsstaaten:
DE FR GB IT NL SE

(56) Entgegenhaltungen:
EP-A- 0 167 054
US-A- 2 505 001
US-A- 3 868 170
US-A- 4 165 223
US-A- 4 426 216

(73) Patentinhaber: Philips Patentverwaltung GmbH,
Wendenstrasse 35 Postfach 10 51 49,
D-2000 Hamburg 1(DE)

(84) Benannte Vertragsstaaten: DE

(73) Patentinhaber: N.V. Philips' Gloeilampenfabrieken,
Groenewoudseweg 1, NL-5621 BA Eindhoven(NL)

(84) Benannte Vertragsstaaten: FR GB IT NL SE

(72) Erfinder: Clasen, Rolf, Dipl.-Phys., Dr.,
Schlossparkstrasse 36, D-5100 Aachen(DE)
Erfinder: Scholz, Heinz, Dipl.-Chem., Dr., Jahn-Platz 6,
D-5100 Aachen(DE)

(74) Vertreter: Nehmzow-David, Fritzi-Maria et al, Philips
Patentverwaltung GmbH
Wendenstrasse 35 Postfach 10 51 49,
D-2000 Hamburg 1(DE)

ACTORUM AG

## Beschreibung

Die Erfindung betrifft ein Verfahren zur Herstellung von Glaskörpern, bei dem aus dem Ausgangsmaterial für den Glaskörper in Form von hochdispersen $SiO_2$-Partikeln ein offenporiger Grünkörper geformt, dieser Grünkörper in einem mit im Grünkörper vorhandenen Verunreinigungen reagierenden, auf eine Temperatur im Bereich von 600 bis 900°C erhitzten Reinigungsgas einem Reinigungsprozeß unterzogen und anschließend gesintert wird.

Die Erfindung bezieht sich weiter auf die Verwendung der nach dem Verfahren gemäß der Erfindung hergestellten Glaskörper.

Das eingangs genannte Verfahren ist insbesondere geeignet zur Herstellung von Vorformen für optische Wellenleiter.

Für die Herstellung von optischen Wellenleitern, aber auch für die Herstellung von Lampenkolben, insbesondere für Halogen- oder Gasentladungslampen, sind Quarzgläser erforderlich, die praktisch keine Verunreinigungen mehr aufweisen und die insbesondere nahezu wasserfrei sind. Die Herstellung derartiger Gläser über den konventionellen Weg der Herstellung aus einer Glasschmelze stößt auf Grenzen, da hier insbesondere die Verunreinigung durch in der Glasmatrix enthaltenes Wasser zu groß ist. Aus diesem Grund wurde für die erwähnten Anwendungszwecke dazu übergegangen, hochreine Gläser durch Sinterung von porösen Grünkörpern aus feinstteiligen Quarzglaspartikeln mit einer Teilchengröße im Bereich von 1 bis 500 nm herzustellen. Die Grünkörper können, da sie porös und damit gasdurchlässig sind, einem Reinigungsschritt in einer auf eine Temperatur von 600 bis 900°C erhitzten, mit vorhandenen Verunreinigungen reagierenden Gasatmosphäre unterzogen werden und werden im gereinigten Zustand anschließend bei Temperaturen um 1500°C zu transparentem Glas gesintert. Störende Verunreinigungen sind z.B. OH-Ionen und Ionen und Partikel der Übergangsmetalle.

Derartige Grünkörper können aus Suspensionen über eine Sol-Gel-Umwandlung geformt werden, es können jedoch auch poröse Grünkörper aus pulverförmigem Glasausgangsmaterial geformt werden, z.B. durch Zentrifugieren und anschließendes Formstabilisieren.

Ein Verfahren zur Herstellung von Glaskörpern, die als Vorform für die Herstellung von optischen Fasern verwendet werden sollen, das mit der zentrifugalen Abscheidung von trockenen Glaspartikeln auf der Innenwand einer Zentrifuge arbeitet, ist aus DE-PS 3 240 355 bekannt. Hier werden die Feststoffpartikel trocken als Schüttkörper während der Schüttung durch Rotationsfliehkraft an der Innenfläche eines Stützkörpers gehalten. Der Schüttkörper wird anschließend an seinem Umfang formstabilisiert mittels Erhitzen und/oder durch Auftragen von erhärtenden Klebern.

Auf diese Weise erhaltene Schüttkörper (Grünkörper) werden dann einem Reinigungsprozeß unterzogen; da die Schüttkörper gasdurchlässig sind, können sie durch chemische Behandlung mit gasförmigen Stoffen in ihren Eigenschaften verändert werden, insbesondere ist eine Reduzierung des OH-Gehaltes erforderlich, da OH-Ionen im infraroten Spektralbereich z.B. die Transmission eines optischen Wellenleiters begrenzen. Um OH-Ionen zu entfernen, wird der formstabilisierte Schüttkörper in einem geschlossenen Gefäß bei Temperaturen von 600 bis 900°C eine bis 5 Stunden (je nach Größe des Schüttkörpers und je nach gewünschter Reinheit des Glaskörpers) einer Atmosphäre von Chlorgas bzw. einem Helium/Chlor-Gasgemisch ausgesetzt.

Damit soll es möglich sein, einen anfänglichen OH-Gehalt von etwa 200 ppm auf <1 ppm zu senken.

Nachteilig bei diesem Verfahren ist, daß eine relativ lange Reinigungszeit erforderlich ist, wenn eine hohe Reinheit des Glaskörpers gefordert ist; dies ist insbesondere bei Großserienprozessen, wie sie auch für die Herstellung von optischen Wellenleitern in jüngster Zeit angelaufen sind, eine Kostenfrage. Problematisch wird ein solcher Reinigungsprozeß auch bei einer großen Grünkörperdichte, wie sie für einen einwandfreien anschließenden Sinterprozeß erforderlich ist. Bei einem schon im Grünkörperstadium hochverdichteten Grünkörper und der damit verbundenen Abnahme des Porenvolumens des Grünkörpers und vergrößerten Diffusionszeiten erfordert der Reinigungsprozeß einmal sehr viel Zeit und bleibt bei großen Grünkörperquerschnitten sogar unvollständig.

Aus der europäischen Patentanmeldung EP-A 1 167 054 veröffentlicht am 08.01.86 und daher fallend unter Artikel 54 (3) EPÜ, ist ein Verfahren zur Reinigung von offenporigen Grünkörpern (ungesinterte Körper) als Vorformen für optische Wellenleiter bekannt, bei dem der Grünkörper in einer Sauerstoff/Chlor-Gasatmosphäre bei einer Temperatur im Bereich von 950 bis 1250°C mit einer Aufheizrate von nicht mehr als 300°C/h über eine Dauer von mindestens 4 h gereinigt wird. Auch bei diesem bekannten Verfahren ist nachteilig, daß eine relativ lange Reinigungszeit erforderlich ist, um einen hochreinen Glaskörper herstellen zu können.

Der Erfindung liegt die Aufgabe zugrunde, ein Verfahren der eingangs genannten Art so zu verbessern, daß höchstreine poröse Grünkörper für die Herstellung von Glaskörpern erreicht werden können und die Dauer des Reinigungsprozesses beträchtlich verkürzt wird.

Diese Aufgabe wird erfindungsgemäß dadurch gelöst, daß der zu reinigende Grünkörper einem zyklischen Reinigungsprozeß unterzogen wird, derart, daß die Vorrichtung, in der sich der zu reinigende Grünkörper befindet, mit strömendem Reinigungsgas durchspült, dann abgeschlossen und anschließend solange evakuiert wird, bis die in dem offenporigen Grünkörper enthaltenen Gase in Form von Reinigungsgas und gasförmigen Reaktionsprodukten entfernt sind, wonach dieser Zyklus wiederholt wird, bis eine hinreichend kleine Verunreinigungskonzentration über den gesamten Querschnitt des Grünkörpers erreicht ist.

Nach einer vorteilhaften Weiterbildung des Verfahrens nach der Erfindung wird für einen Zyklus eine Menge an Reinigungsgas eingespült, die grö-

ßer ist als das Porenvolumen des zu reinigenden Grünkörpers. Hierdurch wird sichergestellt, daß das gesamte Porenvolumen des offenporigen Grünkörpers bei jedem Zyklus mit Reinigungsgas gefüllt werden kann.

Nach vorteilhaften Weiterbildungen des Verfahrens nach der Erfindung wird mit Zyklen in einem Takt von Spüldauer: Evakuierungsdauer im Bereich von 1:1 bis 20:1, vorzugsweise mit einem Takt von 5:1 mit einer Spüldauer von 2,5 min und einer Evakuierungsdauer von 30 s gearbeitet.

Bei einer Dauer von insgesamt nur 1 Stunde wird ein so hochreiner Grünkörper erhalten, daß der aus einem solchen Grünkörper anschließend gesinterte Glaskörper über seinen gesamten Querschnitt eine Wasserkonzentration <10 ppb aufweist.

Ein Grünkörper, der auf die gleiche Weise hergestellt wurde, wie der Grünkörper, der nach dem vorliegenden Verfahren gereinigt wurde, der jedoch nach der bekannten Technik durch Erhitzen in einer Helium/Chlor-Gasatmosphäre bei einer Temperatur von 900°C über eine Dauer von 4 Stunden in einer geschlossenen Vorrichtung gereinigt wurde, zeigte nach dem Sintern des Grünkörpers eine Wasserkonzentration von 2 ppm in den Außenrandbereichen und eine Wasserkonzentration von 80 ppm in der Mitte bei einer Grünkörperdichte von 45% der Dichte kompakten Quarzglases. Die mit der Erfindung erzielten Vorteile bestehen also insbesondere darin, daß nach einem Reinigungsprozeß relativ kurzer Dauer reproduzierbar höchstreine Grünkörper für die Herstellung von Quarzglaskörpern erhalten werden können, selbst wenn hochverdichtete poröse Grünkörper gereinigt werden müssen.

Die Erfindung wird anhand eines Ausführungsbeispiels beschrieben.

Ein Grünkörper wurde durch Zentrifugieren von $SiO_2$-Teilchen eines Teilchendurchmessers im Bereich von 10 bis 100 nm mit einem überwiegenden Anteil von Teilchen eines Teilchendurchmessers von 40 nm in einer Form hergestellt. Dazu wurden 200 g hochdisperses $SiO_2$-Pulver in 300 cm³ wässeriger 0,5%iger Ammoniaklösung verrührt und 10 min lang unter Ultraschalleinwirkung bei einer Frequenz f = 35 kHz dispergiert. Eine solche Suspension wurde in einer großen Laborzentrifuge 15 min bei 10000 g zentrifugiert, die klare Lösung abgegossen und die sedimentierten Körper über 24 h ansteigend 1 Stunde bei 120°C getrocknet. Auf diese Weise wurden Grünkörper einer Dichte von 51% der Dichte von Quarzglas mit einem Durchmesser von 25 mm hergestellt. Diese Grünkörper wurden in einem Ofen bei 900°C 1 Stunde gereinigt, wobei ein $O_2$-Gasstrom von $10^{-3}$ m³/min (bezogen auf Normalbedingungen) und ein $Cl_2$-Gasstrom von $10^{-5}$ m³/min (bezogen auf Normalbedingungen) 2,5 min durch den Ofen gespült wurde und der Ofen anschließend, nach dieser Füllung mit Reinigungsgas, 30 s evakuiert wurde; es ergibt sich damit ein Takt von Fülldauer zu Evakuierungsdauer von 5:1. Dieser Zyklus wurde über die Dauer von 1 Stunde wiederholt. Der unter diesen Bedingungen gereinigte Grünkörper wurde anschließend bei einer Temperatur von 1500°C in einer Heliumatmosphäre mit 2 Vol.-% Chlorgaszusatz gesintert, wobei der Grünkörper mit einer Absenkgeschwindigkeit von 3 mm/min durch den Ofen geführt wurde. Es wurde ein transparenter, blasen- und schlierenfreier Glasstab eines Durchmessers von 20 mm mit Verunreinigungen über den gesamten Querschnitt von <10 ppb erhalten. Der erhaltene Quarzglaskörper hatte eine Dichte von 2,20 g/cm³ und einen Brechungsindex $n_D = 1,4598$.

Die nach dem vorliegenden Verfahren hergestellten höchstreinen Quarzgläser sind mit Vorteil anwendbar für die Herstellung von optischen Wellenleitern, sie sind aber ebenfalls mit Vorteil werwendbar für die Herstellung von Lampenkolben für Halogen- oder Gasentladungslampen, denn diese Gläser müssen, ebenso wie die Gläser für optische Wellenleiter, nahezu wasserfrei sein und einen hohen Siliciumdioxidgehalt aufweisen.

## Patentansprüche

1. Verfahren zur Herstellung von Glaskörpern, bei dem aus dem Ausgangsmaterial für den Glaskörper in Form von hochdispersen $SiO_2$-Partikeln ein offenporiger Grünkörper geformt, dieser Grünkörper in einem mit im Grünkörper vorhandenen Verunreinigungen reagierenden, auf eine Temperatur im Bereich von 600 bis 900°C erhitzten Reinigungsgas einem Reinigungsprozeß unterzogen und anschließend gesintert wird, dadurch gekennzeichnet, daß der zu reinigende Grünkörper einem zyklischen Reinigungsprozeß unterzogen wird, derart, daß die Vorrichtung, in der sich der zu reinigende Grünkörper befindet, mit strömendem Reinigungsgas durchspült, dann abgeschlossen und anschließend solange evakuiert wird, bis die in dem offenporigen Grünkörper enthaltenen Gase in Form von Reinigungsgas und gasförmigen Reaktionsprodukten entfernt sind, wonach dieser Zyklus wiederholt wird, bis eine hinreichend kleine Verunreinigungskonzentration über den gesamten Querschnitt des Grünkörpers erreicht ist.

2. Verfahren nach Anspruch 1, dadurch gekennzeichnet, daß für einen Zyklus eine Menge an Reinigungsgas eingespült wird, die größer ist als das Porenvolumen des zu reinigenden Grünkörpers.

3. Verfahren nach Anspruch 1, dadurch gekennzeichnet, daß mit Zyklen in einem Takt von Spüldauer: Evakuierungsdauer im Bereich von 1:1 bis 20:1 gearbeitet wird.

4. Verfahren nach Anspruch 3, dadurch gekennzeichnet, daß mit einem Takt von 5:1 mit einer Spüldauer von 2,5 min und einer Evakuierungsdauer von 30 s gearbeitet wird.

5. Verfahren nach einem der Ansprüche 1 bis 4, dadurch gekennzeichnet, daß als Reinigungsgas ein Gasgemisch aus $O_2$ mit einem Zusatz von 0,1 bis 10 Vol.-% $Cl_2$ eingesetzt wird.

6. Verfahren nach einem der Ansprüche 1 bis 5, dadurch gekennzeichnet, daß die Glaskörper bei der Herstellung von Vorformen für optische Wellenleiter verwendet werden.

7. Verwendung von nach dem Verfahren gemäß den Ansprüchen 1 bis 5 hergestellten Glaskörpern für die Herstellung von Lampenkolben, insbesondere für die Herstellung von Halogen- oder Gasentladungslampen.

## Claims

1. A method of manufacturing glass bodies, in which the starting material for the glass body, in the form of microdispersed SiO₂ particles, is used to form an open-pore green body which is subjected to a purification process in which the impurities present in the green body react with a purifying gas which is heated to a temperature in the range from 600 to 900°C, after which the green body is sintered, characterized in that the green body to be purified is subjected to a cyclic purificatioon process, such that the arrangement which holds the green body to be purified is flushed with a purification gas and then sealed, after which it is evacuated until the gases present in the open-pore green body in the form of purification gas and gaseous reaction products are removed, after which this cycle is repeated until a sufficiently small concentration of impurities is obtained through the entire cross-section of the green body.

2. A method as claimed in Claim 1, characterized in that for each cycle, the amount of purification gas introduced to flush the green body exceeds the pore volume of the green body to be purified.

3. A method as claimed in Claim 1, characterized in that the cycles have a flushing time: evacuation time ratio in the range from 1:1 to 20:1.

4. A method as claimed in Claim 3, characterized in that the ratio is 5:1, the flushing time is 2.5 min and the evacuation time is 30 s.

5. A method as claimed in any one of the Claims 1 to 4, characterized in that a gas mixture of O₂ to which Cl₂ in an amount of from 0.1 to 10% by volume has been added, is used as a purification gas.

6. A method as claimed in any one of the Claims 1 to 5, characterized in that glass bodies are used in the manufacture of preforms for optical waveguides.

7. The use of glass bodies produced in accordance with the method as claimed in any one of the Claims 1 to 5 for the manufacture of lamp envelopes, in particular, halogen lamps or gas-discharge lamps.

## Revendications

1. Procédé pour la fabrication de corps en verre, selon lequel des corps crus présentant des pores ouverts sont formés à partir du matériau de départ pour le corps en verre sous forme de particules fortement dispersées de SiO₂, ce corps cru étant soumis à un processus de purification dans un gaz de purification qui est porté à une température comprise entre 600 et 900°C et qui réagit avec les impuretés présentes dans le corps cru, et après quoi le corps cru est fritté, caractérisé en ce que le corps cru à purifier est exposé à un processus de purification cyclique de façon que le dispositif dans lequel se trouve le corps cru à purifier soit traversé par du gaz de purification en circulation, après quoi le dispositif est fermé et finalement évacué de façon que les gaz sous forme de gaz de purification et de produits de réaction gazeux présents dans les pores ouverts du corps cru soient enlevés, après quoi ce cycle est répété jusqu'à ce qu'une concentration d'impuretés suffisamment basse soit obtenue sur la totalité du diamètre du corps cru.

2. Procédé selon la revendication 1, caractérise en ce que pour un cycle on introduit une quantité de gaz de purifcation qui est supérieure au volume des pores du corps cru à purifier.

3. Procédé selon la revendication 1, caractérisé en ce qu'on travaille avec des cycles durée de lavage: durée d'évacuation dans un rapport de 1:1 à 20:1.

4. Procédé selon la revendication 3, caractérisé en ce qu'on travaille avec un cycle de 5:1 avec une durée de lavage de 2,5 min et une durée d'évacuation de 30 s.

5. Procédé selon l'une des revendications 1 à 4, caractérisé en ce que comme gaz de purification, on utilise un mélange gazeux de O₂ additionné de 0, 1 à 10% en volume de Cl₂.

6. Procédé selon l'une des revendications 1 à 5, caractérisé en ce que les corps en verre sont utilisés pour la réalisation de préformes pour guide d'ondes optiques.

7. Utilisation de corps en verre réalisés conformément au procédé selon les revendications 1 à 5 pour la réalisation d'ampoules de lampe, notamment pour les ampoules de lampe à décharge dans le gaz ou à l'halogène.